Europäisches Patentamt

European Patent Office

Office européen des brevets

(11) Veröffentlichungsnummer: **0 315 049**
**A2**

(12) **EUROPÄISCHE PATENTANMELDUNG**

(21) Anmeldenummer: 88117895.8

(22) Anmeldetag: 27.10.88

(51) Int. Cl.4: **F23J 15/00 , F23L 9/00 , F23L 15/00 , B01D 53/34**

(30) Priorität: 31.10.87 DE 3737028

(43) Veröffentlichungstag der Anmeldung:
10.05.89 Patentblatt 89/19

(84) Benannte Vertragsstaaten:
**AT BE CH DE ES FR GB IT LI NL**

(71) Anmelder: **Hölter, Heinz, Dipl.-Ing.**
**Beisenstrasse 39-41**
**D-4390 Gladbeck(DE)**

(72) Erfinder: **Hölter, Heinz, Dipl.-Ing.**
**Beisenstrasse 39 - 41**
**D-4390 Gladbeck(DE)**
Erfinder: **Igelbüscher, Heinrich, Dipl.-Ing.**
**Frielinghausstrasse 37 a**
**D-4390 Gladbeck(DE)**
Erfinder: **Gresch, Heinrich, Ing. (grad.)**
**Franz-Lehar-Strasse 25**
**D-4600 Dortmund-Wickede(DE)**
Erfinder: **Dewert, Heribert, Dipl.-Ing.**
**Bahnhofstrasse 23**
**D-4390 Gladbeck(DE)**

(54) **Verfahren zur Reduzierung von CO bei Verbrennungsanlagen, insbesondere bei Wirbelbettfeuerungsanlagen.**

(57) Die Erfindung beschreibt ein Verfahren zur Minderung von CO-Entwicklung in Feuerungsanlagen, vorzugsweise Wirbelbettfeuerungen, das dadurch gekennzeichnet ist, daß die Luft im erhitzten Zustand an den Stellen zugeführt wird, wo erhöhte CO-Konzentrationen gemessen werden, wobei die Luft in Rohrbündeln erhitzt wird, und diese Rohrbündel so ausgebildet sind, daß sie bei Wirbelbettfeuerungsanlagen im Bereich der Brennstoffzudosierung einen prallabscheidenden Effekt in Form einer Prallabscheideranordnung bewirken.

EP 0 315 049 A2

Xerox Copy Centre

### Verfahren zur Reduzierung von CO bei Verbrennungsanlagen, insbesondere bei Wirbelbettfeuerungsanlagen

Es ist bekannt, daß zur Reduzierung von NO$_x$ Rauchgase zurückgeführt werden, um an geeigneter Stelle dem Kesselbereich zugeführt zu werden.

Vielfach erstrebt die NO$_x$-Minderung das Halten des vorgeschriebenen CO-Wertes.

Teilweise wird mit der Minderung des NO$_x$-Wertes der CO-Wert gehoben.

Um dieses zu vermeiden wird erfindungsgemäß vorgeschlagen, Frischluft in geeigneter Weise, vorzugsweise im Feuerungsbereich, durch Wärmetauscheffekte aufzuheizen, Rohrbündelpakete oder Rohrschlangen im Feuerungsbereich oder Abhitzebereich einzubauen und hierdurch die an geeigneten Stellen einzublasende CO-mindernde Frischluft vorzuwärmen.

Je nach CO-Minderung ist es dienlich, daß diese hüft auf eine Temperatur oberhalb von 200° C bis etwa 800° C oder noch höher aufgeheizt und eingeblasen wird.

Der Vorteil liegt hierbei insbesondere in der Maßnahme, daß bei dem Einblasen von Luft zur Minderung von CO bei notwendigen großen Luftmengen hier keine Unterkühlung stattfindet und somit eine CO-mindernde Reaktion nicht ausgelöst werden kann.

Ein weiterer Weg der Erfindung ist darin zu sehen, daß die Rohrbündelwärmer im Bereich des Brennstoffeintrages angeordnet sind und hierdurch die Blasstruktur des Wirbelbettes derart verändern, daß ein ungewollter Auftrag von feinkörnigem Brennstoff verhindert wird, und daß die Vorrichtung zur Durchführung des Verfahrens der CO-Minderung einen Doppeleffekt

    a) den eines Feinabscheiders und

    b) den eines Senkundärlufterhitzers

annimmt.

abscheidenden Effekt in Form einer Prallabscheideranordnung bewirken.

## Ansprüche

Anspruch 1: Verfahren zur Minderung von CO-Entwicklung in Feuerungsanlagen, vorzugsweise Wirbelbettfeuerungen, dadurch gekennzeichnet, daß die Luft im er- hitzten Zustand an den Stellen zugeführt wird, wo erhöhte CO-Konzentrationen gemessen werden.

Anspruch 2: Verfahren nach Anspruch 1, dadurch kennzeichnet, daß die Luft in Rohrbündeln erhitzt wird, wobei diese Rohrbündel so ausgebildet sind, daß sie bei Wirbelbettfeuerungsanlagen im Bereich der Brennstoffzudosierung einen prall-